# EUROPÄISCHE PATENTANMELDUNG

(11) **EP 1 914 201 A1**
(43) Veröffentlichungstag der Anmeldung: **23.04.2008**
(21) Anmeldenummer: 07017626.8
(22) Anmeldetag: 08.09.2007
(51) Int. Cl.: C02F 1/32

(54) **Vorrichtung zur UV-Behandlung von flüssigen Medien, insbesondere von Wasser**

(30) Priorität: 18.10.2006 DE 202006015958 U
(71) Anmelder: HYDROTEC Gesellschaft Für Ökologische Verfahrenstechnik mbH, 95088 Selb (DE)
(72) Erfinder: Schulze, Wolfgang, 95111 Rehau (DE)
(74) Vertreter: Graf, Helmut

(57) **Zusammenfassung**

Die Erfindung bezieht sich auf eine Vorrichtung zur UV-Behandlung von flüssigen Medien, insbesondere von Wasser, mit UV-Strahlung, mit wenigstens einem von dem flüssigen Medium durchströmbaren Gehäuseinnenraum oder Behandlungsraum, mit wenigstens einem ersten Anschluss zum Zufuhren des Mediums und mit wenigstens einem zweiten Anschluss zum Abfuhren des Mediums aus dem Behandlungsraum, sowie mit wenigstens einem im Behandlungsraum angeordneten und von dem Medium umströmten UV-Strahler. Der Behandlungsraum ist zumindest auf einer Teillänge von einem den wenigstens einen UV-Strahler sowie auch eine Gehäuselangsachse umschließenden Ringraum gebildet, und der wenigstens eine erste Anschluss ist so angeordnet und/oder ausgebildet, dass er bezogen auf die Gehäuselangsachse tangential in den Ringraum mündet.

## Beschreibung

Die Erfindung bezieht sich auf eine Vorrichtung gemäß Oberbegriff Patentanspruch 1.

Zur Desinfektion oder Entkeimung von Trinkwasser werden mit zunehmendem Erfolg UV-Entkeimungsanlagen oder -vorrichtungen verwendet, die im Wesentlichen aus einem von dem Trink- oder Brauchwasser durchströmten Gehäuse mit wenigstens einem in dem Gehäuse untergebrauchten UV-Strahler bestehen.

Die Wirtschaftlichkeit solcher Vorrichtungen richtet sich u.a. danach, wie gut das Verhältnis von aufgewandter Energie für den Betrieb des UV-Strahlers zu abgetöteten Mikroorganismen bzw. Bakterien ist. Um dieses Verhältnis zu optimieren, ist es erforderlich, die im Wasser mitgeführten, abzutötenden Mikroorganismen einer möglichst gleichmäßig einer UV-Lichtdosis auszusetzen, die zum Abtöten der Mikroorganismen ausreicht und damit eine optimale Entkeimung gewährleistet.

Die UV-Lichtdosis ist dabei das Produkt aus der UV-Lichtintensität und der Einwirkzeit. Jeder Mikroorganismus bewegt sich durch den UV-Behandlungsraum auf einem individuellen Strömungsweg und erfährt somit auch eine Behandlung mit einer individuellen UV-Lichtdosis, die sich aus der Länge des Strömungsweges, aus der Fließgeschwindigkeit und aus der UV-Lichtintensität ergibt, die entlang des Strömungsweges herrscht und u.a. abhängig ist, von der UV-Durchlässigkeit des Wassers und vom Abstand des UV-Strahlers.

Bekannte UV-Entkeimungsanlagen oder -vorrichtungen haben den Nachteil, dass sich für das den Behandlungsraum zwischen einem Einlass und einem Auslass durchströmende Wasser Strömungswege sehr unterschiedlicher Länge und damit abhängig von dem jeweiligen Strömungsweg unterschiedliche UV-Lichtdosierungen ergeben und dass die UV-Lichtdosis stark von der Strömungsgeschwindigkeit abhängt, mit der der UV-Behandlungsraum vom Wasser durchströmt wird.

Aufgabe der Erfindung ist es, eine Vorrichtung aufzuzeigen, die diese Nachteile vermeidet. Zur Lösung dieser Aufgabe ist eine Vorrichtung entsprechend dem Patentanspruch 1 ausgebildet.

Bei der Erfindung erfolgt das Einleiten des zu behandelnden flüssigen Mediums, welches vorzugsweise wiederum Wasser und dabei insbesondere Brauch- oder Trinkwasser oder aber Abwasser ist, in den Behandlungsraum tangential oder etwa tangential zu einer eine Gehäuselängsachse umschließenden Kreislinie oder Kreiszylinderfläche, sodass sich um den UV-Strahler eine schraubenlinienförmige Haupt- oder Gesamtströmung ergibt, und zwar mit partieller Wirbelbildung oder Turbulenzen. Da der Drall der wendelförmigen Gesamtströmung bzw. des wendelförmigen Strömungsfeldes u.a. von der Strömungsgeschwindigkeit abhängt, mit der das flüssige Medium in den z.B. ringförmigen Behandlungsraum eintritt, ist die Anzahl der Windungen, auf der sich jedes Volumenelement des flüssigen Mediums und damit auch mitgeführte Mikroorganismen durch den Behandlungsraum bewegen, abhängig von der Strömungsgeschwindigkeit. Weiterhin ist auch die Intensität von partiellen Wirbelbildungen und Turbulenzen abhängig von der Strömungsgeschwindigkeit, d.h. die Intensität solcher Wirbelbildungen und Turbulenzen steigt mit der Strömungsgeschwindigkeit. Dies bedeutet u.a. dass der Weg jedes mit dem flüssigen Medium mitgeführten Mikroorganismus durch den Behandlungsraum mit der Strömungsgeschwindigkeit zunimmt, sodass eine zumindest weitestgehend von der Strömungsgeschwindigkeit unabhängige Einwirkzeit erreicht wird. Eine nicht unwesentliche Rolle spielt hierbei auch die Ausrichtung der Vorrichtung in der Weise, dass die von dem ringförmigen Behandlungsraum umschlossene Gehäuselängsachse in vertikaler Richtung oder annähernd in vertikaler Richtung orientiert ist.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in schematischer Darstellung und in einem Längsschnitt eine Vorrichtung gemäß der Erfindung;
- Fig. 2: einen Schnitt entsprechend der Linie II-II der Figur 1;
- Fig. 3 u. 4: Darstellungen ähnlich Figur 1 und 2;
- Fig. 5: in schematischer Teildarstellung und im Längsschnitt eine Vorrichtung gemäß der Erfindung;
- Fig. 6: eine Draufsicht auf die Vorrichtung der Figur 5.

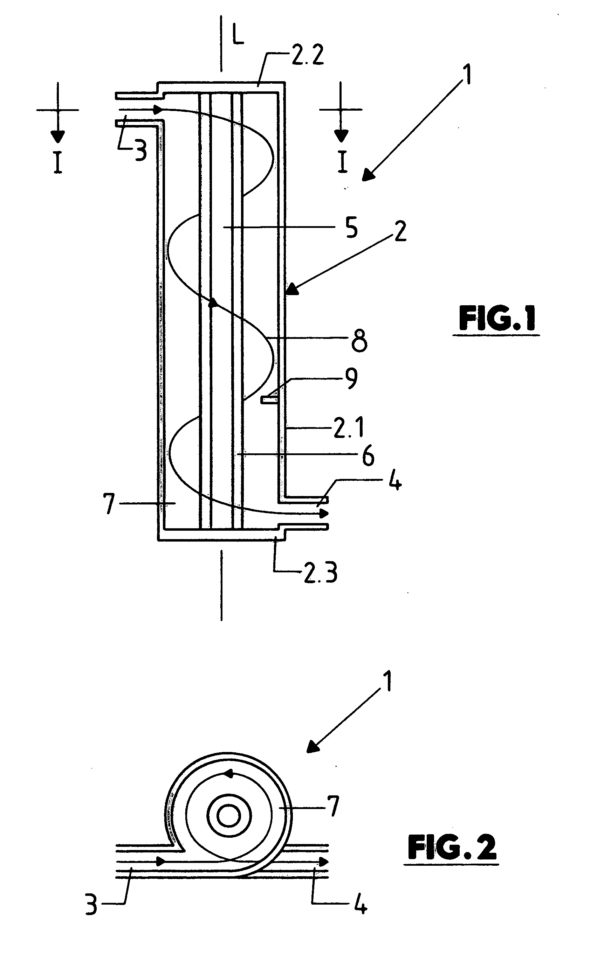

In den Figuren 1 und 2 ist 1 eine Vorrichtung in Form einer UV-Desinfektionsanlage zum Entkeimen von Trinkwasser mit UV-Licht. Die Vorrichtung 1 besteht im Wesentlichen aus einem langgestreckten kreiszylinderförmigen Gehäuse 2 mit einer Umfangswand 2.1, einer Gehäuseoberseite 2.2 und einer Gehäuseunterseite 2.3. Das Gehäuse 2, welches im Anwendungsfall das mit seiner Längsachse L in vertikaler Richtung oder im Wesentlichen in vertikaler Richtung orientiert ist, weist an seinem oberen Ende einen Einlass 3 für das zu entkeimende Trink- oder Brauchwasser und an seinem unteren Ende einen Auslass 4 für das entkeimte Trink- oder Brauchwasser auf. Die Anschlüsse 3 und 4 sind jeweils von Rohrstücken oder -stutzen gebildet, die tangential in den Innenraum des Gehäuses 2 einmünden, d.h. die Achsen der Anschlüsse 3 und 4 sind jeweils in Ebenen senkrecht zur Gehäuselängsachse L angeordnet und bilden Tangenten an eine gedachte, die Gehäuselängsachse L konzentrisch umschließende Kreislinie, und zwar bei der dargestellten Ausführungsform an Kreislinien mit jeweils demselben Radius.

Achsgleich mit der Gehäuselängsachse L ist im Inneren des Gehäuses 2 ein UV-Strahler 5 vorgesehen, der über die gesamte Länge des Gehäuses 2. Der UV-Strahler 5 besteht bei der dargestellten Ausführungsform aus einem Quarzrohr 6 und aus wenigstens einer im Quarzrohr angeordneten UV-Lichtquelle ausreichend hoher Leistung, beispielsweise einer UV-Licht abgebenden elektrischen Entladungsstrecke. Zwischen der kreiszylinderförmigen Außenfläche des UV-Strahlers 5 und der zylinderförmigen Mantelfläche des Gehäuses 2 ist ein ringförmiger UV-Behandlungsraum 7 gebildet, der von dem zu entkeimenden Trinkwasser durchströmt wird.

Bei der dargestellten Ausführungsform sind die Anschlüsse 3 und 4 weiterhin so angeordnet, dass die Achse dieser Anschlüsse in einer gemeinsamen, parallel zur Gehäuselängsachse L verlaufenden Ebene liegt, d.h. in der Draufsicht auf die Vorrichtung 1 (Figur 2) als achsgleich miteinander angeordnet erscheinen.

Durch die Anordnung der Gehäuselängsachse L in vertikaler oder annähernd vertikaler Richtung sowie durch die beschriebene Ausbildung der Vorrichtung wird erreicht, dass das zu entkeimende Trinkwasser mit den mitgeführten Mikroorganismen den Behandlungsraum 7 in einer den UV-Strahler 5 schraubenförmig umschließenden Gesamtströmung von oben nach unten durchströmt, wie dies in den Figuren 1 und 2 mit der jeweiligen Pfeillinie 8 angedeutet ist. Auf dem Weg zwischen dem Anschluss 3 und dem Anschluss 4 erfolgt die UV-Behandlung, wobei die zum Abtöten der Mikroorganismen notwendige UV-Dosis durch die Leistung des UV-Strahlers 5 sowie durch die Verweildauer im Behandlungsraum 7 bestimmt ist. Die Verweildauer ist ihrerseits abhängig von der Strömungsgeschwindigkeit im Behandlungsraum 7 sowie von der Länge des Weges, den ein betrachtetes Wasservolumenelement bzw. ein mitgeführter Mikroorganismus zwischen dem Anschluss 3 und dem Anschluss 4 innerhalb des Behandlungsraumes 7 zurücklegt.

Es hat sich gezeigt, dass durch die beschriebene Ausbildung und Anordnung der Vorrichtung bei konstanter Leistung des UV-Strahlers eine für die angestrebte Entkeimung ausreichende Verweildauer für jeden mitgeführten Mikroorganismus in dem Behandlungsraum 7 erreicht wird, und zwar unabhängig von der Strömungsgeschwindigkeit. Dies ergibt sich dadurch, dass durch den mit der Strömungsgeschwindigkeit zunehmenden Drall des Wassers nach dem Eintritt in den Behandlungsraum 7 sich auch die Anzahl der den UV-Strahler 5 umschließenden Windungen der spiralförmigen Gesamtströmung erhöht und umgekehrt die Anzahl dieser Windungen mit abnehmender Strömungsgeschwindigkeit ebenfalls abnimmt, sodass bei hoher Strömungsgeschwindigkeit durch ein Vergrößerung des Strömungsweges und bei reduzierter Strömungsgeschwindigkeit durch eine Verringerung des Strömungsweges eine die angestrebte Entkeimung sicherstellende Verweil- oder Behandlungsdauer erreicht ist.

Durch die beschriebene Ausbildung der Vorrichtung ergibt sich aber im Behandlungsraum 7 nicht nur die durch die Druckdifferenz zwischen den Anschlüssen 3 und 4 beeinflusste, im Wesentlichen spiralförmige Gesamtströmung 8 sondern auch partielle Wirbelbildungen und Turbulenzen. Diese resultieren aus Fliehkräften der spiralförmigen Strömung sowie aus Unterschieden in den Strömungsgeschwindigkeiten zwischen den die Gesamtströmung (Strömungsfeld) bildenden Einzelströmungen, insbesondere zwischen den Strömungen an der Innenfläche der Wandung 2.1 benachbarten und solchen Bereichen des es bzw. der Gesamtströmung, die (Bereiche) von der Innenfläche der Gehäusewandung weiter beabstandet sind, und zwar mit zunehmender Tendenz bei Zunahme der Strömungsgeschwindigkeit der Gesamtströmung. Hierdurch ergeben sich mit steigender Strömungsgeschwindigkeit eine Verlängerung des Behandlungsweges und auch eine höhere Effizienz der UV-Entkeimung.

Durch die beschriebene Anordnung der Anschlüsse 3 und 4 in einer gemeinsamen Ebene parallel zur Gehäuselängsachse L wird weiterhin der Einbau der Vorrichtung 1 in ein Leitungssystem für Trink- oder Brauchwasser wesentlich vereinfacht.

Durch die partielle Wirbelbildung, die im Übrigen durch entsprechende Einbauten im Inneren des Gehäuses 2, beispielsweise durch in der Figur 1 mit 9 angedeuteten Prallblechen oder dergleichen noch erhöht werden kann, wird vor allem die Effizienz der UV-Entkeimung durch zusätzliche Verwirbelung auch in solchen Anwendungen wesentlich gesteigert, in denen das zu entkeimende Wasser für UV-Licht nur schwer durchlässig ist, wie dies z.B. bei Abwässern der Fall sein kann.

Die Länge sowie der Durchmesser des Gehäuses 2 sind an die jeweilige für die Vorrichtung erforderliche Leistung angepasst. Durch Änderung des Durchmessers und der Länge des Gehäuses 2 sowie durch Änderungen des Querschnittes der Anschlüsse 3 und 4 kann der Verlauf der Gesamtströmung durch das Gehäuse 2, insbesondere auch die Anzahl der Windungen der spiralförmigen Gesamtströmung 8 variiert werden, sodass mit Hilfe einfachster, fertigungstechnisch leicht durchzuführender Änderungen ganz wesentlich auf die Strömungseigenschaften, wie z.B. auf das Verhältnis von laminal zu turbulent durchflossenem Volumen Einfluss genommen werden kann, beispielsweise im Sinne einer erhöhten turbulenten Strömung bei für UV-Licht nur schwer durchlässiges Wasser, wie z.B. Abwasser. Durch die Möglichkeit, mit Hilfe einfacher geometrischer Veränderungen großen Einfluss auf die Strömung und auf die Effizienz der UV-Entkeimung zu nehmen, sind auch Optimierungen und Anpassungen der Vorrichtung 1 an den jeweiligen Anwendungsfall leicht durchführbar.

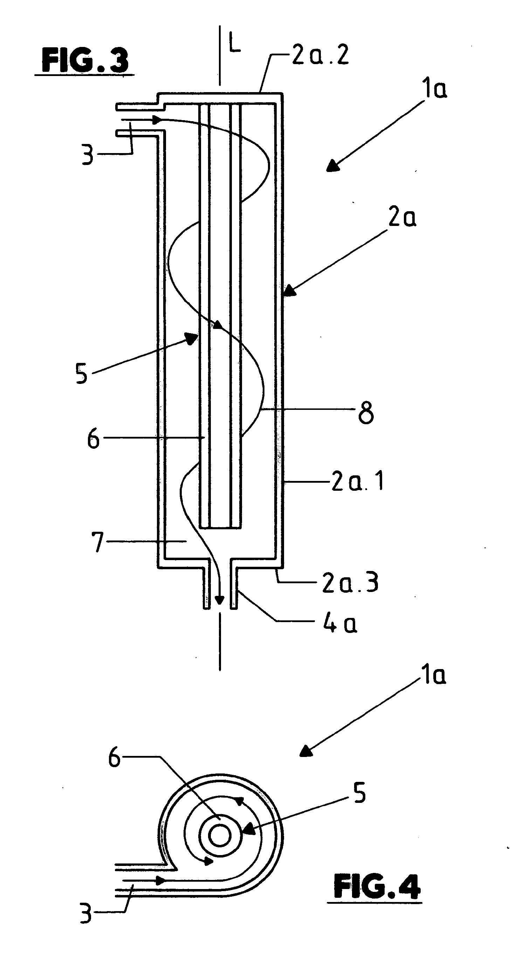

Die Figuren 2 und 3 zeigen eine Vorrichtung 1 a, die sich von der Vorrichtung 1 im Wesentlichen dadurch unterscheidet, dass das an seiner Mantelfläche 2a.1 wiederum kreiszylinderförmig ausgebildete Gehäuse 2a anstelle des Anschlusses 4 einen Anschluss 4a aufweist, der an der Unterseite 2a.3 des Gehäuses 2a vorgesehen ist und mit seiner Achse achsgleich mit der Gehäuselängsachse L sowie auch mit der Achse des UV-Strahlers 5 liegt. Letzterer reicht von der Oberseite 2a.2 des Gehäuses 2a bis in die Nähe der Unterseite 2a.3, ist von dieser aber beabstandet, sodass sich ein Durchfluss für das Wasser zu dem Anschluss 4a besteht.

Durch die tangentiale Anordnung des Anschlusses 3 ergibt sich auch bei dieser Ausführungsform die den UV-Strahler 5 umschließende wendel- oder spiralförmige Gesamtströmung 8 mit partiellen Wirbelbildungen und Turbulenzen, insbesondere auch im unteren Bereich des Gehäuseinnenraumes dort, wo die zunächst im Wesentlichen schraubenlinienförmige Gesamtströmung 8 in die in Richtung der Gehäuselängsachse L verlaufende Strömung am Anschluss 4a übergeht.

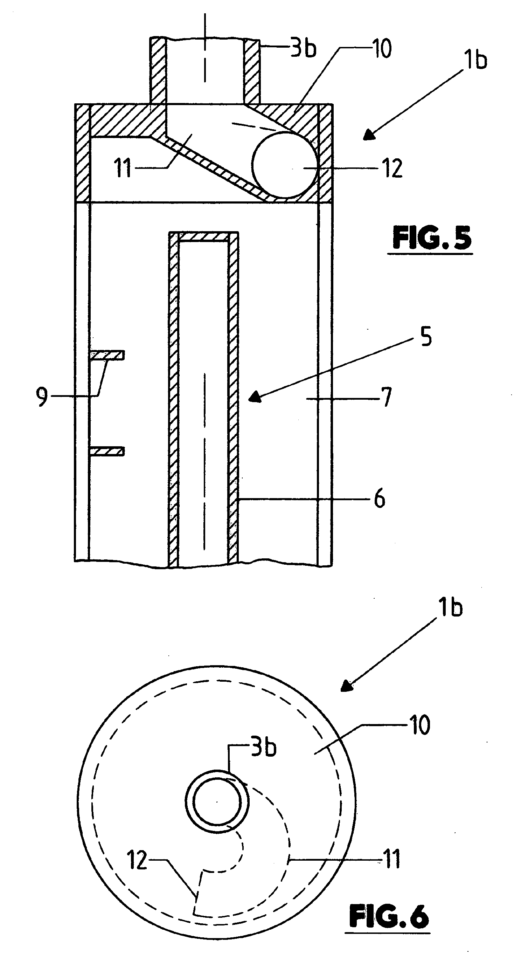

Die Figuren 5 und 6 zeigen in Teildarstellung und Seitenansicht sowie in Draufsicht eine Vorrichtung 1 b, die sich von den Vorrichtungen 1 und 1a dadurch unterscheidet, dass anstelle des tangentialen Anschlusses 3 ein achsgleich mit der Gehäuselängsachse L angeordneter Anschluss 3b vorgesehen ist. Um auch bei dieser Ausführungsform die den UV-Strahler 5 umgebende schraubenlinienförmige Gesamtströmung zu erreichen, ist das Gehäuseoberteil bei dieser Ausführungsform von einem Gehäuseoberteil 10 gebildet, der den Anschluss 3b aufweist und in dem ein Kanal 11 ausgebildet ist, der einerseits mit dem Anschluss 3b in Verbindung steht und andererseits eine Öffnung 12 bildet, die tangential in den dem UV-Strahler 5 umschließenden Behandlungsraum 7 einmündet.

Durch die tangentiale Anordnung der Öffnung 12 ergibt sich auch bei dieser Ausführungsform die schraubenlinienförmige Gesamtströmung um den UV-Strahler 5. Der den Auslass bildende Anschluss ist entweder entsprechend dem Anschluss 4 tangential zur Gehäuselängsachse oder aber entsprechend dem Anschluss 4a axial im Bezug auf die Gehäuselängsachse orientiert.

Die Erfindung wurde voranstehend an Ausführungsbeispielen beschrieben. Es versteht sich, dass zahlreiche Änderungen sowie Abwandlungen möglich sind, ohne das dadurch der der Erfindung zugrunde liegende Erfindungsgedanke verlassen wird.

### Bezugszeichenliste

- 1, 1a, 1b: Vorrichtung zur Behandlung eines flüssigen Mediums, insbesondere Wasser
- 2, 2a: Gehäuse
- 2.1, 2a.1: Gehäuseumfangswand
- 2.2, 2a.2: Gehäuseoberseite
- 2.3, 2a.3: Gehäuseunterseite
- 3, 3b: Anschluss
- 4, 4a: Anschluss
- 5: UV-Strahler
- 6: Quarzrohr
- 7: Ringraum
- 8: Gesamt- oder Hauptströmung
- 9: Prallplatte
- 10: Deckel
- 11: Kanal
- 12: Öffnung

- L: Gehäuselängsachse

## Patentansprüche

1. Vorrichtung zur UV-Behandlung von flüssigen Medien, insbesondere von Wasser, mit UV-Strahlung, mit wenigstens einem von dem flüssigen Medium durchströmbaren Gehäuseinnenraum oder Behandlungsraum (7), mit wenigstens einem ersten Anschluss (3, 3b) zum Zuführen des Mediums und mit wenigstens einem zweiten Anschluss (4, 4a) zum Abführen des Mediums aus dem Behandlungsraum (7), sowie mit wenigstens einem im Behandlungsraum (7) angeordneten und von dem Medium umströmten UV-Strahler,
**dadurch gekennzeichnet, dass** der von dem Medium durchströmte Behandlungsraum zumindest auf einer Teillänge von einem den wenigstens einen UV-Strahler (5) sowie auch eine Gehäuselängsachse (L) umschließenden Ringraum gebildet ist,
und dass der wenigstens eine erste Anschluss (3, 3b) so angeordnet und/oder ausgebildet ist, dass er bezogen auf die Gehäuselängsachse (L) tangential in den Ringraum (7) mündet.

2. Vorrichtung nach Anspruch 1, **dadurch gekennzeichnet, dass** die Gehäuselängsachse (L) eine vertikale Achse oder eine im Wesentlichen vertikale Achse ist, und dass sich der wenigstens eine erste Anschluss (3, 3b) in vertikaler Richtung oberhalb des wenigstens einen zweiten Anschlusses (4, 4a) befindet.

3. Vorrichtung nach Anspruch 1 oder 2, **dadurch gekennzeichnet, dass** der Ringkanal (7) bezogen auf die Gehäuselängsachse (L) außen liegend von einer bezogen auf die Gehäuselängsachse (L) rotationssymmetrisch ausgebildeten Wandung (2.1, 2a.1) des Gehäuses (2, 2a) begrenzt ist.

4. Vorrichtung nach einem der vorhergehenden Ansprüche, **dadurch gekennzeichnet, dass** der Ringraum (7) bezogen auf die Gehäuselängsachse (L) innen liegend von einer im Bezug auf die Gehäuselängsachse (L) rotationssymmetrischen und für UV-Licht transparenten Wandung des wenigstens einen UV-Strahlers begrenzt ist.

5. Vorrichtung nach Anspruch 3 oder 4, **dadurch gekennzeichnet, dass** die den Ringraum (7) außen und/oder innen begrenzende Wandung kreiszylinderförmig ausgebildet ist.

6. Vorrichtung nach einem der vorhergehenden Ansprüche, **dadurch gekennzeichnet, dass** der wenigstens eine zweite Anschluss (4, 4a) mit seiner Achse tangential in den Ringraum (7) mündet.

7. Vorrichtung nach einem der vorhergehenden Ansprüche, **dadurch gekennzeichnet, dass** der zweite Anschluss (4a) in eine Achsrichtung parallel oder annähernd parallel zur Gehäuselängsachse (L) in den Ringkanal (7) einmündet, z.B. achsgleich mit der Gehäuselängsachse (L).

8. Vorrichtung nach einem der vorhergehenden Ansprüche, **dadurch gekennzeichnet, dass** der wenigstens eine zweite Anschluss (4) in einer Achsrichtung in den Innenraum des Gehäuses (2) einmündet, die tangential zu einer die Gehäuselängsachse (L) umschließenden gedachten Kreislinie oder einem die Gehäuselängsachse (L) umschließenden gedachten Kreiszylinder orientiert ist.

9. Vorrichtung nach einem der vorhergehenden Ansprüche, **dadurch gekennzeichnet, dass** der wenigstens eine erste Anschluss (3) und der wenigstens eine zweite Anschluss (4) mit ihren Achsen in einer gemeinsamen, parallel zur Gehäuselängsachse (L) orientierten Ebene angeordnet sind.

10. Vorrichtung nach einem der vorhergehenden Ansprüche, **gekennzeichnet durch** ihre Ausbildung zur Entkeimung von Trink- oder Brauchwasser oder zur Entkeimung von Abwasser.
